# EUROPEAN PATENT SPECIFICATION

(11) **EP 4 522 914 B1**
(45) Date of publication and mention of the grant of the patent: **01.07.2026**
(21) Application number: 23725751.4
(22) Date of filing: 09.05.2023
(51) Int. Cl.: F23C 10/20, F23C 9/00, F23C 10/28

(54) **METHOD OF OPERATING A GRATE ARRANGEMENT IN A FLUIDIZED-BED BOILER**
VERFAHREN ZUM BETREIBEN EINER ROSTANORDNUNG IN EINEM WIRBELBETTKESSEL
PROCÉDÉ POUR OPÉRER UNE GRILLE DANS UNE CHAUDIÈRE À LIT FLUIDISÉ

(30) Priority: 12.05.2022 FI 20225416
(43) Date of publication of application: 19.03.2025
(73) Proprietor: Valmet Technologies Oy, 02150 Espoo (FI)
(72) Inventor: KAINU, Vesa, 33900 Tampere (FI)
(74) Representative: Papula Oy
(86) International application number: PCT/FI2023/050256
(87) International publication number: WO 2023/218128

(56) References cited:
- EP-A1- 3 957 909
- EP-A2- 0 443 850
- WO-A2-2009/098358
- JP-A- S63 140 201

## Description

### BACKGROUND

The invention relates to a method of operating a grate arrangement for use in a fluidized -bed boiler.

A problem with fluidized bed combustion boilers is that there is no operating time upkeeping possibility for bed area to break agglomerates that emerge in the fluidized bed in the course of time. This has several negative consequences, for instance possibility to use more challenging fuel specifications is restricted.

WO2009098358A1, EP3957909A1, and JPS63140201A disclose fluidized bed boilers wherein recirculated flue gas is mixed with air to obtain a fluidizing gas, and wherein the amount of recirculation gas and the amount of fluidizing gas can be adjusted in subareas of the grate.

### BRIEF DESCRIPTION

According to the invention, there is provided a method of operating a grate arrangement for use in a fluidized-bed boiler, the arrangement comprising a grate having length and width defining the area of said grate, plurality of gas feeding means for feeding fluidizing gas above the grate, said plurality of gas feeding means being distributed on the area of the grate, the arrangement further comprising a gas supply system connected to the plurality of gas feeding means for supplying fluidizing gas therethrough above the grate, a booster gas supply system connected to at least some of the plurality of gas feeding means for supplying booster gas therethrough above the grate, the plurality of gas feeding means being grouped in at least two feeding groups, each of which feeding groups is extending only to a subarea of the area of the grate, controlling means arranged for controlling the gas supply system and the booster gas supply system so that while at least one of the feeding groups is open to the gas supply system for feeding fluidizing gas above the grate, at least one another of the feeding groups is closed to the gas supply system and open to the booster gas supply system for feeding booster gas above the grate, the method comprising adjusting the supply of fluidizing gas and booster gas above the grate with the controlling means by allowing or preventing of said gas or booster gas to flow in the feeding groups, and changing said supply of fluidizing gas and booster gas sequentially from one feeding group to another feeding group such that all the feeding groups in the grate supply booster gas above the grate in its turn.

Thereby a method of operating the above-mentioned grate arrangement that promotes upkeeping the fluidized-bed boiler and enhances operation thereof may be achieved.

The method is characterised by what is stated in the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the area of the grate comprises at least four subareas, preferably at least six subareas.

An advantage is that the more the subareas, the more specific focusing of booster gas may be achieved.

In one embodiment, the grate comprises several horizontal pipes arranged parallel and spaced from each other, wherein the gas feeding means are arranged in said pipes.

An advantage is that the pipes provide an easy and straightforward structure for dividing the grate into the feeding groups.

In one embodiment, at least one of the feeding groups extends on the whole length of the horizontal pipe(s).

An advantage is that the feeding group is easy to put into practice.

In one embodiment, at least plurality of the feeding groups comprises one horizontal pipe only, preferably all the feeding groups comprise one horizontal pipe only.

An advantage is that a precise control of supplying of booster gas may be achieved.

In one embodiment, at least some of the feeding groups comprises two or more horizontal pipes.

An advantage is that number of the controlling devices may be reduced along with reducing number of the feeding groups

In one embodiment, the grate is constructed of a structure comprising a plate structure or a structure comprising a membrane structure, and a gas cavity is arranged under the grate, wherein the plurality of gas feeding means are arranged to said plate structure or the membrane structure, the gas feeding means arranged to provide openings extending through the plate structure.

An advantage is that the gas cavity may be divided in feeding groups.

In one embodiment, the gas supply system is connected to a first end of the feeding group, and the booster gas supply system is connected to a second end, opposite to the first end.

An advantage is that it may be easier to arrange space enough for the two systems by fitting them apart.

In one embodiment, both the gas supply system and the booster gas supply system are connected to the first end of the feeding group.

An advantage is that the number of components and ducts in the arrangement may be lessened.

In one embodiment, the gas supply system is connected to the first end and the second end of the feeding group, and - the booster gas supply system is connected only to the first end of the feeding group.

An advantage is that large or at least long grates may be provided with the arrangement.

In one embodiment, both the gas supply system and the booster gas supply system are connected to the first end and the second end of the feeding group.

An advantage is that large or at least long grates may be provided with the arrangement and also effectively covered with booster gas.

In one embodiment of the method, the supply of booster gas is carried out at predetermined time intervals.

An advantage is that using and applying of booster gas to the fluidized bed may be carried out in a simple way.

### BRIEF DESCRIPTION OF FIGURES

Some embodiments illustrating the present invention are described in more detail in the attached drawings, in which
Figure 1 is a schematic side view of an arrangement and method for use in a fluidized-bed boiler in partial cross-section,
Figure 2 is a schematic side view of another arrangement and method for use in a fluidized-bed boiler in partial cross-section,
Figure 3 is a schematic side view of third arrangement and method for use in a fluidized-bed boiler in partial cross-section,
Figure 4 is a schematic side view of fourth arrangement and method for use in a fluidized-bed boiler in partial cross-section,
Figures 5a and 5b are schematic top views of fifth arrangement and method for use in a fluidized-bed boiler in partial cross-section,
Figure 6 is a schematic top view of sixth arrangement and method for use in a fluidized-bed boiler in partial cross-section,
Figure 7 is a schematic side view of seventh arrangement and method for use in a fluidized-bed boiler in partial cross-section, and
Figure 8 is a schematic side view of eighth arrangement and method for use in a fluidized-bed boiler in partial cross-section.

In the figures, some embodiments are shown simplified for the sake of clarity. Similar parts are marked with the same reference numbers in the figures.

### DETAILED DESCRIPTION

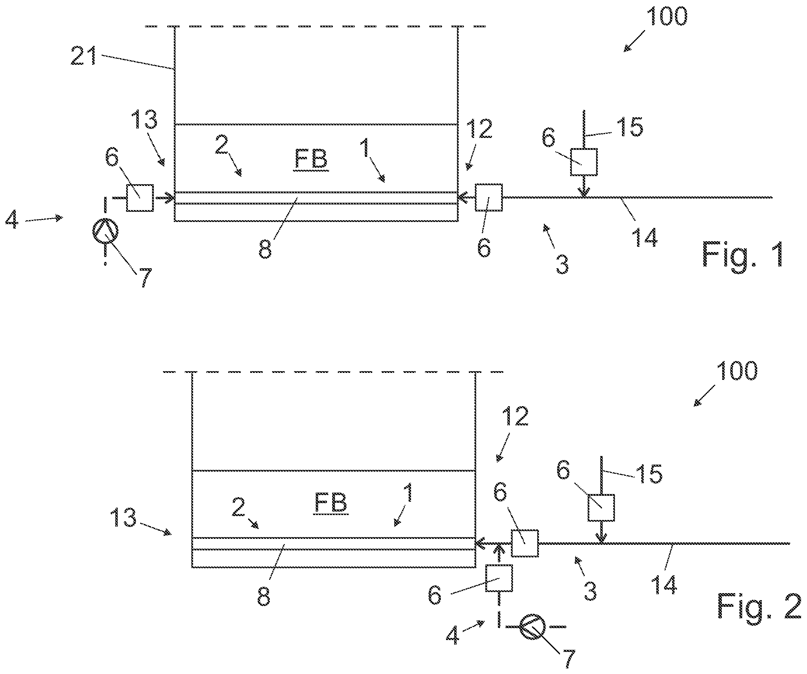

**Figure 1** is a schematic side view of an arrangement and method for use in a fluidized-bed boiler in partial cross-section.

The arrangement 100 comprises a grate 1 that is arranged in the bottom part of a fluidized bed boiler 21 (shown only partially) .

In the fluidized bed boiler 21 it is carried out a fluidized bed combustion process. Said process may comprise a bubbling fluidized bed (BFB) or a circulating fluidized bed (CFB).

The fluidized bed boiler comprises a furnace for burning combustible material.

A fluidized bed refers to a layer formed by solid and granular substance, where the grains of the solid substance are in a fluidized state. Said solid substance comprises combustible material, burnt material, and non-combustible material, i.e. bed material, such as for example sand. The fluidized state can be achieved, for example, by fluidizing the grains by means of a fluidizing gas flow. Heat formed in the combustion is transferred to the bed material. From the bed material, heat can be recovered by a heat transfer surface, such as a heat exchanger. The heat transfer surface is typically cooled by means of a cooling medium.

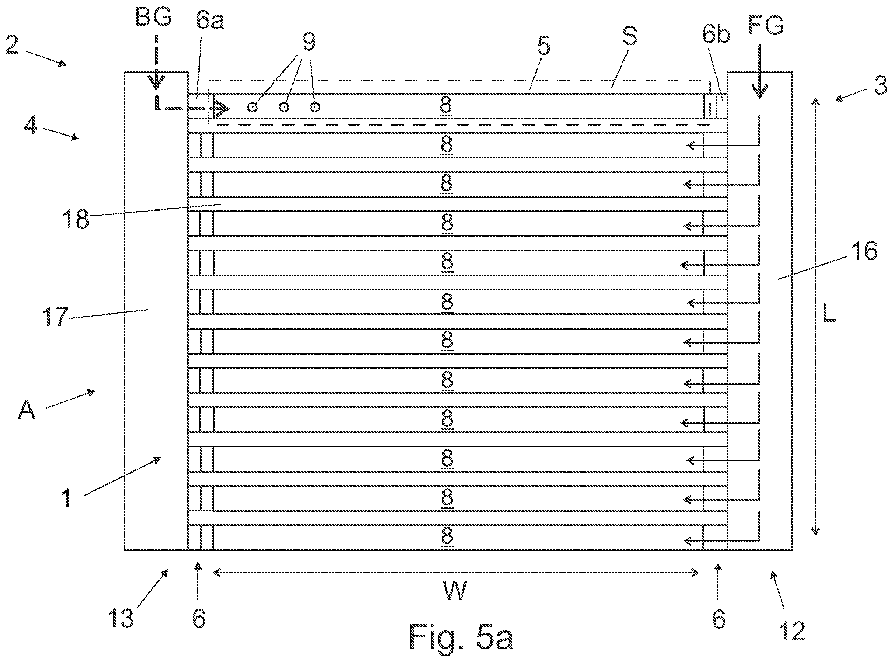

The grate 1 has length L and width W (as shown in Figure 5a, for instance). Said length L and width W define the area A of the grate.

Plurality of gas feeding means 2 are arranged in the grate 1 for feeding fluidizing gas above said grate 1 in a fluidizing bed FB. The gas feeding means 2 are distributed on the area A of the grate, typically distributed evenly on said area A.

The fluidizing gas effects fluidization in the fluidizing bed FB. The fluidizing gas also constitutes the combustion air to effect combustion of the combustible material admixed to the fluidized bed material.

The combustible material may comprise coal, woody biomass, peat, combustible fractions of municipal or industrial waste, proceeded municipal waste, recovered industrial waste, agricultural residues, recycled wood, for instance. According to an aspect, the combustible material includes or consists of challenging fuels that have high content of alkali and/or non-burning materials, such as metals, rock material and corresponding materials.

In one embodiment, the gas feeding means 2 is just a simple opening. However, the gas feeding means 2 may also have a more complicated structure. In some embodiments, the gas feeding means 2 comprises a gas feed pipe and a gas nozzle, for instance.

The arrangement 100 further comprises a gas supply system 3 that is connected to the plurality of gas feeding means 2 for supplying fluidizing gas therethrough in the fluidizing bed FB. The gas supply system 3 comprises various components, devices and apparatuses that produce, direct and control said fluidizing gas.

In some embodiments, such as shown in Figures of this disclosure, the gas supply system 3 comprises a primary gas feed 14 and a recirculation flue gas feed 15. The primary gas feed 14 is arranged for supplying primary gas that is typically air. The recirculation flue gas feed 15 supplies flue gas taken from flue gases of the fluidized bed boiler 21. The gas supply system 3 comprises control means including one or more control valve(s) 6 by which the primary gas can be mixed with the recirculation flue gas in any desired ratio. In one embodiment, the control valve 6 is a damper.

A booster gas supply system 4 is connected to at least some of the plurality of gas feeding means 2 for supplying booster gas through said gas feeding means 2 above the grate 1. The booster gas is or at least comprises recirculated flue gas, i.e. flue gas from the fluidized bed boiler 21. In one embodiment, the booster gas comprises air.

The plurality of gas feeding means 2 are grouped in at least two feeding groups 5, such as shown in Figures 5a - 8. Each of the feeding groups 5 is extending only to a subarea S of the area A of the grate.

The controlling means 6, 7 are arranged for controlling not only the gas supply system 3, but also the booster gas supply system 4.

Said supply systems 3, 4 are controlled so that while at least one of the feeding groups 5 is open to the gas supply system 3 for feeding fluidizing gas above the grate 1, at least one another of the feeding groups 5 is open to the booster gas supply system 4 for feeding booster gas above the grate 1 but closed to the gas supply system 3. typically, the feeding groups 5 are open one at a time to the booster gas supply system 4.

In one embodiment, the grate 1 comprises several horizontal pipes 8 arranged parallel and spaced from each other, and the gas feeding means 2 are arranged in said pipes 8. Some embodiments of this kind of structure are shown in Figures 1-6.

In the embodiment shown in **Figure 1** (also shown in **Figures 5a-5b**), the gas supply system 3 is connected to a first end 12 of the feeding group 5 or pipes 8 thereof, whereas the booster gas supply system 4 is connected to a second end 13, opposite to the first end, of the feeding group 5 or pipes 8 thereof.

When the controlling means allows fluidizing gas FG to be fed or to flow in the feeding group 5, booster gas BG is not fed or not allowed to flow in said feeding group 5. Thus, said feeding group 5 or the gas feeding means 2 thereof feed(s) fluidizing gas above the grate 1. On the other hand, booster gas is not fed through said feeding group 5 or the gas feeding means 2 thereof.

It will be appreciated that in some embodiments, feeding fluidizing gas FG simultaneously in all the feeding groups 5 and feeding means 2 thereof may be considered as a normal state of running the fluidized bed boiler 21.

If feeding of booster gas in the fluidized bed FB is required, the controlling means stops or prevents feeding of fluidizing gas FG in one of the feeding groups 5, and, instead, allows feeding booster gas BG in said feeding group 5 and the gas feeding means 2 thereof.

The pressure of the booster gas BG fed in the fluidized bed is preferably higher than the pressure of fluidizing gas FG. Thus, booster gas may cause "bouncing" of bed material that prevents formation of agglomerates therein. In one embodiment, the pressure of the booster gas may be varied, which may enhance prevention of agglomerates.

According to an aspect, booster gas BG fed in the subarea S rises fluidizing speed in a part of the fluidized bed FB above or proximity of said subarea S. In one embodiment, said fluidizing speed is two to five times as high as normal speed of fluidizing gas FG.

**Figure 2** is a schematic side view of another arrangement and method for use in a fluidized-bed boiler in partial cross-section. In this embodiment, both the gas supply system 3 and the booster gas supply system 4 are connected to the first end 12 of the feeding group 5. This embodiment functions similar way as the embodiment disclosed in Figure 1.

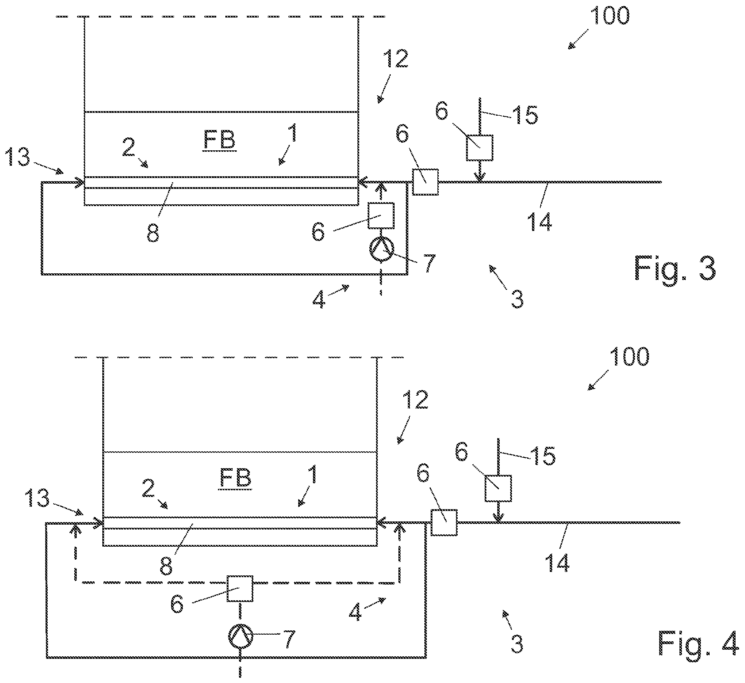

**Figure 3** is a schematic side view of third arrangement and method for use in a fluidized-bed boiler in partial cross-section. In this embodiment, the gas supply system 3 is connected both to the first and the second ends 12, 13 of the feeding group 5. The booster gas supply system 4 is connected only to the first end 12 of the feeding group 5. This embodiment functions similar way as the embodiment disclosed in Figure 1.

**Figure 4** is a schematic side view of fourth arrangement and method for use in a fluidized-bed boiler in partial cross-section. In this embodiment, both the gas supply system 3 and the booster gas supply system 4 are connected to both ends of the feeding group (5), i.e. to the first and the second ends 12, 13 of the feeding group 5.

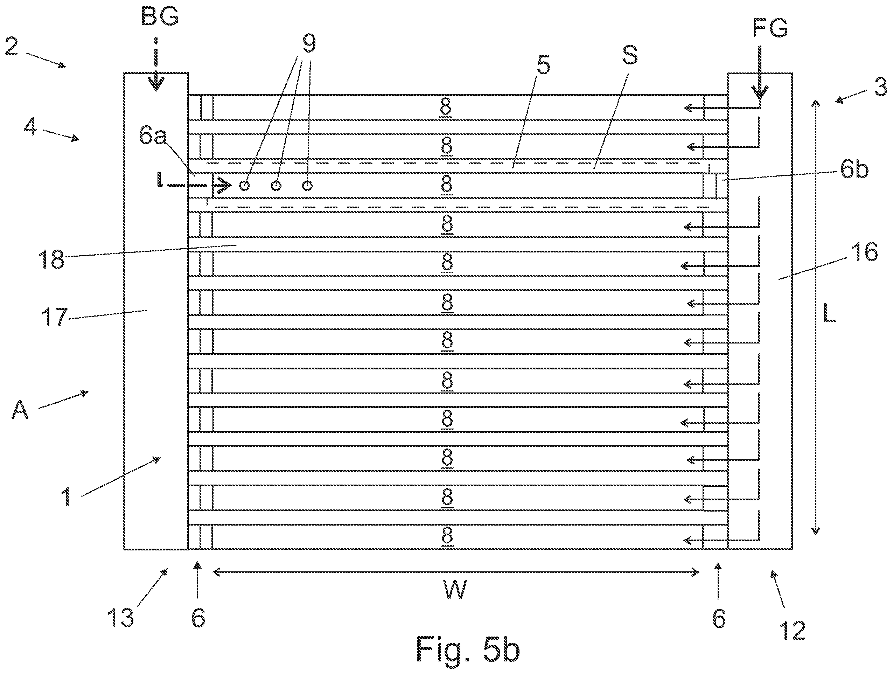

**Figures 5a** and **5b** are schematic top views of fifth arrangement and method for use in a fluidized-bed boiler in partial cross-section.

As described above, in one embodiment the grate 1 comprises several horizontal pipes 8 arranged parallel and spaced from each other, and the gas feeding means 2 are arranged in said pipes 8.

Typically, the pipes 8 are cooled by a cooling medium and may comprise cooling channels (not shown) for that purpose. Said cooling medium may be liquid, such as water, or gaseous medium, such as steam, or a mixture of water and steam. In one embodiment, the cooling channels are connected to heat transfer tubes (not shown) arranged to walls of the fluidized bed boiler.

The area A of the grate is divided into plurality of subareas S. In one embodiment, the grate comprises at least four subareas S. In one embodiment, the grate comprises at least six subareas S. The embodiment shown in Figure 5a comprises twelve (12) subareas S, each of which comprises one horizontal pipe 8 only.

In one embodiment, such as shown in Figures 5a, 5b the feeding groups 5 extends on the whole length of the horizontal pipe(s) 8.

In one embodiment, all the subareas S have a same size. For instance, each of the subareas S may have one horizontal pipe 8, and all the pipes have same dimensions. In another embodiment, the grate 1 comprises subareas S varying in their sizes. For instance, some of the feeding groups 5 comprises one horizontal pipe 8 only, whereas some another feeding group(s) 5 comprises two or even more horizontal pipes 8.

In one embodiment of the method, supply of fluidizing gas and booster gas is chanced sequentially from one feeding group 5 to another feeding group. In one embodiment, this is realized in an extent that all the feeding groups 5 in the grate are fed by booster gas in its turn. However, other courses of supplying booster gas can be accomplished.

The supply of booster gas taking place in a feeding group takes a certain period of time. In one embodiment, this period is selected in range of 5s - 30s. Following said period, the feeding group is changed to feed fluidizing gas.

In one embodiment, the supply of booster gas is carried out at predetermined time intervals. In other words, fluidizing gas is supplied most of the running time of the fluidized bed boiler, but at certain time intervals booster gas is supplied. Said time interval is selected according to characteristics of the process and the fluidized bed boiler, and it may be e.g. some hours.

In one embodiment, booster gas is supplied in a continuous way, for instance using above-mentioned sequential feeding of fluidizing gas and booster gas. As the feeding of booster gas has proceeded from the first fed feeding group 5 to the last one, the sequential feeding of booster gas is started again.

In one embodiment, the supplying of booster gas is started as the need arises, based on measurement data that reflect the condition of the process and the fluidized bed boiler.

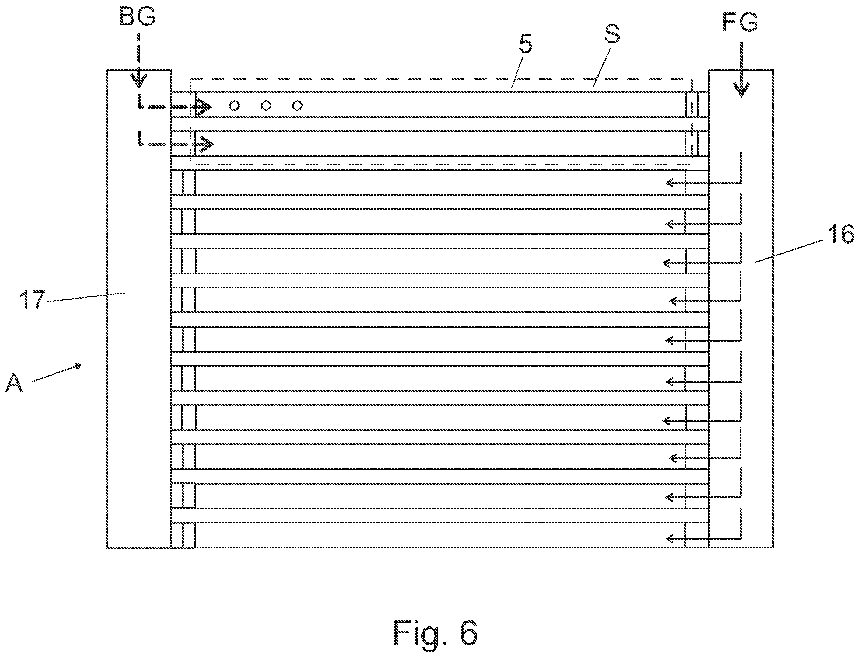

**Figure 6** is a schematic top view of sixth arrangement and method for use in a fluidized-bed boiler in partial cross-section. In one embodiment, at least some of the feeding groups 5 comprises two or more horizontal pipes 8. In one embodiment, all the feeding groups 5 comprises two or more horizontal pipes 8.

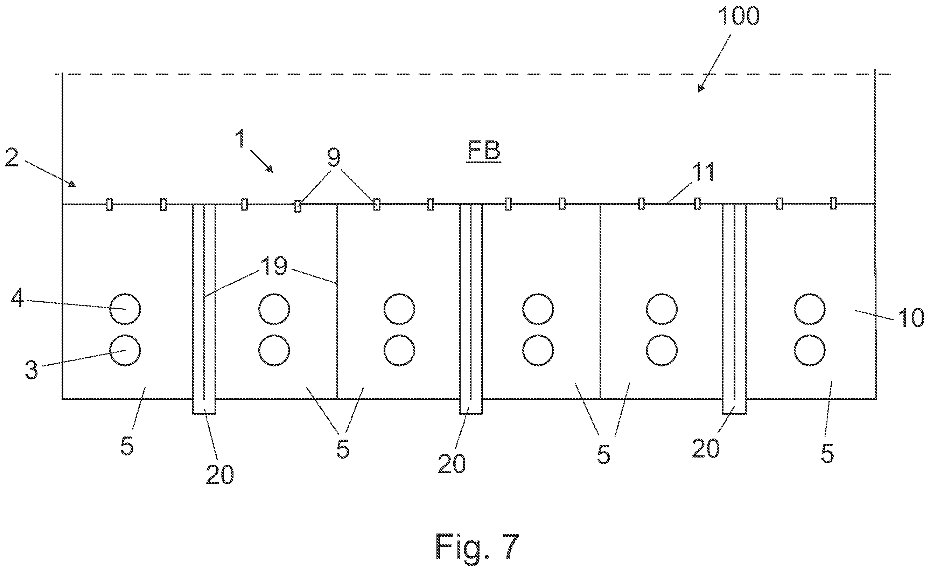

**Figure 7** is a schematic side view of seventh arrangement and method for use in a fluidized-bed boiler in partial cross-section.

In one embodiment, the grate 1 is constructed of a plate structure 11 or a structure 11 comprising a membrane structure. The membrane structure is constructed from cooling pipes, typically parallelly arranged, having therebetween fins. The plurality of gas feeding means 2 are mounted on said fins.

A gas cavity 10 is arranged under the grate 1. The gas supply system 3 and the booster gas supply system 4 are connected to the gas cavity 10, and their gas supply is controlled with the controlling means as described in this disclosure. The plurality of gas feeding means 2 are arranged to the plate structure 11 for providing openings extending through the plate structure from the gas cavity 10 to the fluidized bed FB above the grate.

The gas cavity 10 is divided to plurality of feeding groups 5 by partition walls 19. The embodiment shown in Figure 7 comprises six (6) feeding groups 5.

The grate 1 is provided with at least one solids removal conduit 20 through which solids can be removed from the fluidized bed FB.

In one embodiment, such as shown in Figure 7, the plate structure or the membrane structure is a substantially flat horizontally arranged plane surface. In other embodiments, the plate structure or the membrane structure has a surface profile that comprises three-dimensional shapes.

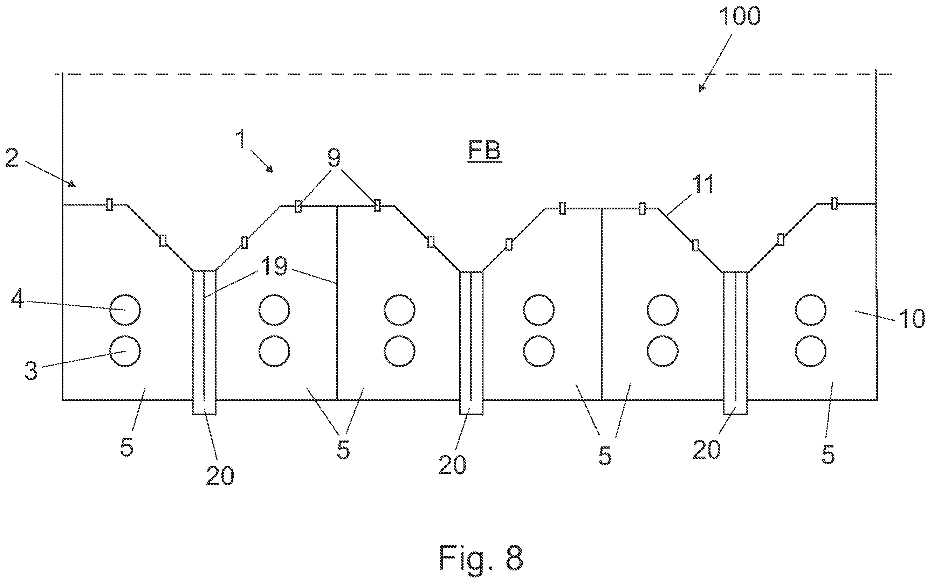

**Figure 8** is a schematic side view of eighth arrangement and method for use in a fluidized-bed boiler in partial cross-section. This embodiment is quite similar to one shown in Figure 7, however now the grate 1 is provided with trench-like sections that assist in removing solids from the fluidized bed FB.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: grate
- 2: gas feeding means
- 3: gas supply system
- 4: booster gas supply system
- 5: feeding group
- 6 a, b: control valve, e.g. damper
- 7: blower
- 8: pipe
- 9: nozzle
- 10: gas cavity
- 11: plate structure
- 12: first end of feeding group
- 13: second end of feeding group
- 14: primary gas feed
- 15: recirculation flue gas feed
- 16: gas duct
- 17: booster gas duct
- 18: gap
- 19: partition wall
- 20: solids removal conduit
- 21: fluidized bed boiler

- 100: arrangement

- A: grate area
- BG: booster gas
- FB: fluidized bed
- FG: fluidizing gas
- L: length
- S: subarea
- W: width

## Claims

1. A method of operating a grate arrangement (100) for use in a fluidized-bed boiler, the arrangement (100) comprising
- a grate (1) having length (L) and width (W) defining the area (A) of said grate,
- plurality of gas feeding means (2) for feeding fluidizing gas above the grate (1),
- said plurality of gas feeding means (2) being distributed on the area (A) of the grate,
- the arrangement (100) further comprising
- a gas supply system (3) connected to the plurality of gas feeding means (2) for supplying fluidizing gas therethrough above the grate (1),
- a booster gas supply system (4) connected to at least some of the plurality of gas feeding means (2) for supplying booster gas therethrough above the grate (1),
- the plurality of gas feeding means (2) being grouped in at least two feeding groups (5), each of which feeding groups (5) is extending only to a subarea (S) of the area (A) of the grate,
- controlling means (6, 7) arranged for controlling the gas supply system (3) and the booster gas supply system (4) so that while at least one of the feeding groups (5) is open to the gas supply system (3) for feeding fluidizing gas above the grate (1), at least one another of the feeding groups (5) is closed to the gas supply system (3) and open to the booster gas supply system (4) for feeding booster gas above the grate (1), wherein
- the booster gas is or at least comprises recirculated flue gas, and
- the pressure of the booster gas (BG) fed in the fluidized bed is higher than the pressure of fluidizing gas (FG), the method comprising
- adjusting the supply of fluidizing gas and booster gas above the grate (1) with the controlling means (6, 7) by allowing or preventing of said gas or booster gas to flow in the feeding groups (5), **characterised in that** the method further comprises
- changing said supply of fluidizing gas and booster gas sequentially from one feeding group (5) to another feeding group (5) such that all the feeding groups (5) in the grate supply booster gas above the grate (1) in its turn.

2. The method as claimed in claim 1, wherein
- the supply of booster gas is carried out at predetermined time intervals.

## Patentansprüche

1. Verfahren zum Betreiben einer Rostanordnung (100) zur Verwendung in einem Wirbelschichtkessel, wobei die Anordnung (100) umfasst:
- einen Rost (1) mit einer Länge (L) und einer Breite (W) aufweist, die die Fläche (A) des Rostes definieren,
- eine Vielzahl von Gaszuführungseinrichtungen (2) zum Zuführen von Fluidisierungsgas über den Rost (1),
- wobei die mehreren Gaszuführungseinrichtungen (2) über die Fläche (A) des Rostes verteilt sind,
- die Anordnung (100) ferner umfasst
- ein Gaszuführungssystem (3), das mit der Vielzahl von Gaszuführungseinrichtungen (2) verbunden ist, um durch diese oberhalb des Rostes (1) Fluidisierungsgas zuzuführen,
- ein Verstärkungsgasversorgungssystem (4), das mit mindestens einigen der mehreren Gaszuführungseinrichtungen (2) verbunden ist, um durch diese oberhalb des Rostes (1) Verstärkungsgas zuzuführen,
- wobei die Vielzahl von Gaszuführungseinrichtungen (2) in mindestens zwei Zuführungsgruppen (5) gruppiert sind, wobei sich jede der Zuführungsgruppen (5) nur auf einen Teilbereich (S) der Fläche (A) des Rostes erstreckt,
- Steuerelemente (6, 7), die angeordnet sind, um das Gaszuführungssystem (3) und das Verstärkungsgasversorgungssystem (4) so zu steuern, dass, während mindestens eine der Zuführungsgruppen (5) zum Gaszuführungssystem (3) für die Zuführung von Fluidisierungsgas über dem Rost (1) geöffnet ist, mindestens eine andere der Zuführungsgruppen (5) zum Gaszuführungssystem (3) geschlossen und zum Verstärkungsgasversorgungssystem (4) für die Zuführung von Verstärkungsgas über dem Rost (1) geöffnet ist, wobei
- das Verstärkungsgas rezirkuliertes Rauchgas ist oder dieses zumindest umfasst, und
- der Druck des in das Wirbelbett eingespeisten Verstärkungsgases (BG) höher ist als der Druck des Fluidisierungsgases (FG), wobei das Verfahren umfasst:
- Einstellen der Zufuhr von Fluidisierungsgas und Verstärkungsgas über dem Rost (1) mit den Steuerelementen (6, 7), indem das Gas oder das Verstärkungsgas in die Zuführungsgruppen (5) strömen darf oder verhindert wird, **dadurch gekennzeichnet, dass** das Verfahren ferner Folgendes umfasst:
- Umschalten der Zufuhr von Fluidisierungsgas und Verstärkungsgas nacheinander von einer Zuführungsgruppen (5) zu einer anderen Zuführungsgruppen (5), so dass alle Zuführungsgruppen (5) des Rostes nacheinander Verstärkungsgas über dem Rost (1) zuführen.

2. Verfahren nach Anspruch 1, wobei
- die Zufuhr von Verstärkungsgas in vorgegebenen Zeitabständen erfolgt.

## Revendications

1. Méthode de fonctionnement d'un agencement de grille (100) pour son utilisation dans une chaudière à lit fluidisé, l'agencement (100) comprenant
- une grille (1) présentant une longueur (L) et une largeur (W) définissant la surface (A) de ladite grille,
- une pluralité de moyens d'alimentation en gaz (2) pour l'alimentation en gaz de fluidisation au-dessus de la grille (1),
- ladite pluralité de moyens d'alimentation en gaz (2) étant répartie sur la surface (A) de la grille,
- l'agencement (100) comprenant en outre
- un système d'alimentation en gaz (3) raccordé à la pluralité de moyens d'alimentation en gaz (2) pour l'alimentation en gaz de fluidisation à travers celui-ci au-dessus de la grille (1),
- un système d'alimentation en gaz de suralimentation (4) raccordé à au moins une partie de la pluralité de moyens d'alimentation en gaz (2) pour l'alimentation en gaz de suralimentation à travers celui-ci au-dessus de la grille (1),
- la pluralité de moyens d'alimentation en gaz (2) étant regroupée en au moins deux groupes d'alimentation (5), chacun des groupes d'alimentation (5) s'étendant uniquement à une sous-zone (S) de la surface (A) de la grille,
- des moyens de commande (6, 7) agencés pour commander le système d'alimentation en gaz (3) et le système d'alimentation en gaz de suralimentation (4) de sorte que, alors qu'au moins l'un des groupes d'alimentation (5) est ouvert au système d'alimentation en gaz (3) pour l'alimentation en gaz de fluidisation au-dessus de la grille (1), au moins un autre des groupes d'alimentation (5) est fermé au système d'alimentation en gaz (3) et ouvert au système d'alimentation en gaz de suralimentation (4) pour l'alimentation en gaz de suralimentation au-dessus de la grille (1), dans laquelle
- le gaz de suralimentation est ou au moins comprend des gaz de combustion recyclés, et
- la pression du gaz de suralimentation (BG) alimenté dans le lit fluidisé est supérieure à la pression du gaz de fluidisation (FG), la méthode comprenant
- le réglage de l'alimentation en gaz de fluidisation et en gaz de suralimentation au-dessus de la grille (1) avec les moyens de commande (6, 7) en permettant ou en empêchant ledit gaz ou gaz de suralimentation de s'écouler dans les groupes d'alimentation (5), **caractérisée en ce que** la méthode comprend en outre
- le changement de ladite alimentation en gaz de fluidisation et en gaz de suralimentation séquentiellement d'un groupe d'alimentation (5) à un autre groupe d'alimentation (5) de sorte que tous les groupes d'alimentation (5) dans la grille fournissent un gaz de suralimentation au-dessus de la grille (1) à leur tour.

2. Méthode selon la revendication 1, dans laquelle
- l'alimentation en gaz de suralimentation est mise en œuvre à des intervalles de temps prédéterminés.
